# EUROPEAN PATENT SPECIFICATION

(11) **EP 1 685 737 B1**
(45) Date of publication and mention of the grant of the patent: **06.10.2010**
(21) Application number: 04799085.8
(22) Date of filing: 08.11.2004
(51) Int. Cl.: H04L 12/28, H04W 52/02

(54) **METHOD AND SYSTEM FOR PROVIDING SERVICE TO WIRELESS DEVICES OPERATING IN A POWER SAVING MODE**
VERFAHREN UND SYSTEM ZUR DIENSTBEREITSTELLUNG FÜR IN EINEM ENERGIESPARMODUS ARBEITENDE DRAHTLOSE GERÄTE
PROCEDE ET SYSTEME PERMETTANT DE FOURNIR UN SERVICE A DES DISPOSITIFS SANS FIL FONCTIONNANT EN MODE ECONOMIE D'ENERGIE

(30) Priority: 10.11.2003 US 518907 P; 28.05.2004 US 575277 P
(43) Date of publication of application: 02.08.2006
(73) Proprietor: ST-Ericsson SA, 1228 Plan-les-Ouates (Genève) (CH)
(72) Inventor: SOOMRO, Amjad, Briarcliff Manor, New York 10510-8001 (US)
(74) Representative: Style, Kelda Camilla Karen
(86) International application number: PCT/IB2004/052343
(87) International publication number: WO 2005/046281

(56) References cited:
- US-A- 5 365 516
- US-A- 5 914 950
- US-A1- 2003 007 466
- ZHANG L Y ET AL: "Energy-efficient real-time scheduling in IEEE 802.11 wireless LANs" PROCEEDINGS OF THE 23RD. INTERNATIONAL CONFERENCE ON DISTRIBUTED COMPUTING SYSTEMS. ICDCS 2003. PROVIDENCE, RI, MAY 19 - 22, 2003, INTERNATIONAL CONFERENCE ON DISTRIBUTED COMPUTING SYSTEMS, LOS ALAMITOS, CA : IEEE COMP. SOC, US, vol. CONF. 23, 19 May 2003 (2003-05-19), pages 658-667, XP010642337 ISBN: 0-7695-1920-2

## Description

This application relates to wireless communications and, more particularly, to providing services to client devices utilizing power saving capabilities.

Wireless networking of servers, routers, access points and client devices has greatly expanded the ability of users to create and expand existing networks. Further, wireless network can be dynamically modified as users join or the net work. In fact, wireless networks have allowed clients to connect devices as such as notebook or laptop computers, Personal Digital Assistants (PDAs), cell phones, to office and home networks from remote locations not typically associated with the network. Such remote locations, referred to as hot spots, allow clients to access their own networks from local coffee shops.

To facilitate the wireless communication explosion and provide compatibility among different devices, communications protocols, such as IEEE 802.11a/b/g have been established. However, these protocols are designed primarily for the transmission of data and treat all data equally. Such equal treatment precludes a service provider from guaranteeing a known Quality of Service (QoS) when the data transmitted includes a mix of textual data, video, audio or telephony. Failure to timely deliver video data, for example, may cause errors in motion rending the images unusable. Hence, the IEEE 802.11e standard has been proposed that establishes a priority of transmission for different types of data. In one aspect, a priority is established based simply on the data type. In another aspect, parameters may be assigned to specific data types to insure a specified QoS.

An important aspect of the network client devices is that they are battery operated. Thus, many of these devices desire to conserve power and operate in a power saving mode. In this mode, the client devices are not powered and, thus, are not able to receive data from service providers operating at the routers, servers, or access points when transmission is required. Rather, a client device may request that the service provider provide service at predetermined times, i.e., scheduled, or on-demand, i.e., unscheduled. However, as more devices enter and demand service from the network, the demands of individual devices can introduce conflicts in one or more network components, i.e. , servers, routers, access points, etc. , or there may be requests that the network may not be able to honor.

Hence, there is a need in the industry for a method and system for processing client device requests for service that is able to avoid and/or resolve conflicts that can be introduced by such requests.

US 2003/007466 describes a method for predictive scheduling in a bi-directional communication system. In a communication system, a control unit has knowledge that a subscriber station will have data to be transmitted at an ascertainable time in the future. The control unit in the communication system utilizes the knowledge to schedule the data transmission without the need for the subscriber station to transmit to request schedule for the transmission

US 5365516 describes a multilaterating two-way message delivery system for mobile resource management for providing two-way radio data communication for a multitude of portable transponders using single frequency in half duplex communication. The system includes at least one transponder device which transmits and receives data using a radio frequency communication link, and an array of at least three base stations which communicate with the transponder device using the radio frequency communication link. The radio frequency communication link employed by each base station and the transponder device is designed to provide multilateration information and to deliver message data simultaneously. Further, a control arrangement is coupled to the array of base stations to coordinate the communication between the base stations and the transponder devices. Time-division multiplex and spread spectrum technology is employed by the system for communication efficiency and minimizing the effect of multipath interference.

There is provided according to a first aspect of the present invention a method for determining in a network component when to provide service to client devices operating in power-saving mode in a wireless network, said method comprising the steps of receiving a service request signal from said client device; determining an ability to accommodate said service requested; determining whether the service requested is to be provided on a scheduled basis, wherein said scheduled basis is requested by the setting of a scheduled bit on a schedule field within a Traffic Specification format; and providing an indication of the ability to accommodate said service requested to said client device.

There is provided according to a second aspect of the invention a device for determining in a network component when to provide service to client devices operating in power-saving mode in a wireless network, said device comprising: a memory; a processor in communication with said memory, said processor operable to execute code for receiving a service request signal from said client device; determining an ability to accommodate said service requested; determining whether the service requested is to be provided on a scheduled basis, wherein said scheduled basis is requested by the setting of a scheduled bit on a schedule field within a Traffic Specification format; and providing an indication of the ability to accommodate said requested service to said client device.

There is provided according to a third aspect of the invention a processor within a network component for determining the ability of said network component to honor a service request signal received from a client device, said processor executing code for reviewing an operating state of said network component; reviewing said servicing request signal; determining whether the service requested is to be provided on a scheduled basis, wherein said scheduled basis is requested by the setting of a scheduled bit on a schedule field within a Traffic Specification format; accommodating said service request, with modification when necessary, when said operating state and said servicing request signal are corresponding; and providing an indication of said accommodation to said client.
Figure 1 illustrates a conventional wireless communication system;
Figures 2a-2d illustrate MAC layer formats for the proposed IEEE 802.11e standard;
Figures 3a-3c illustrates traffic specification element formats between a requesting device and network component;
Figure 4 illustrates a flow chart for providing service to client devices operating in power-saving mode in accordance with a first aspect of the invention;
Figure 5 illustrates a flow chart for providing service to client devices operating in power-saving mode in accordance with a second aspect of the invention;
Figure 6 illustrates a flow chart for providing service to client devices operating in power-saving mode in accordance with a second aspect of the invention; and
Figure 7 illustrates a system for executing the processing shown in herein.

It is to be understood that these drawings are solely for purposes of illustrating the concepts of the invention and are not intended as a definition of the limits of the invention. The embodiments shown in the figures herein and described in the accompanying detailed description are to be used as illustrative embodiments and should not be construed as the only manner of practicing the invention. Also, the same reference numerals, possibly supplemented with reference characters where appropriate, have been used to identify similar elements.

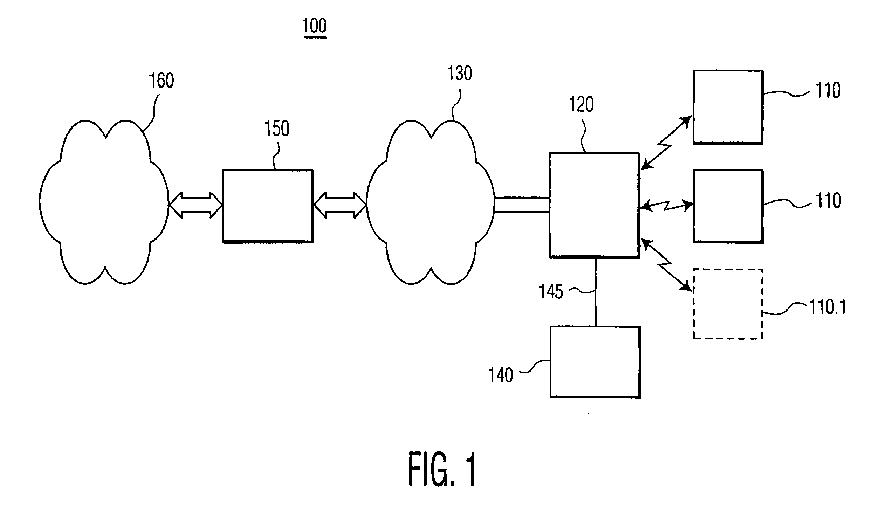

Figure 1 illustrates a conventional based wireless network 100 that can allow wireless devices 110, through server, router or access point (AP) 120 to receive or transmit data to communication network 130, e.g., the Internet. AP 120 may further enable devices 140, connected via a cable 145, to receive and transmit data to network 130 and/or to devices 110. Also shown is network 130 in communication with server 150, which may also be in communication with a second network 160. As would be recognized second network 160 and network 130 may be the same or different network. In this illustrative example, network 130 may be a network associated with a local hot spot and network 160 may be a corporate or home network that permits access by only authorized users.

Device 110.1, shown in dotted lines, represents a client device that is dynamically joined through AP 120 to network 130. In this case, AP 120 must acknowledge the addition of device 110.1 and accommodate its requests for service in view of the existing load imposed by the already connected devices 110 and 140.

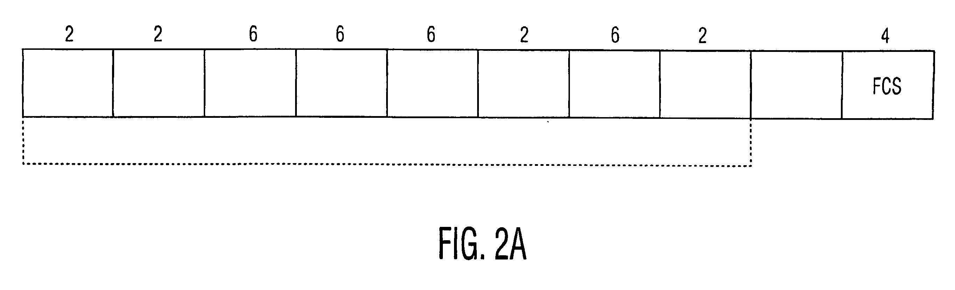

Figure 2a illustrates a proposed IEEE 802.11e MAC layer data format.

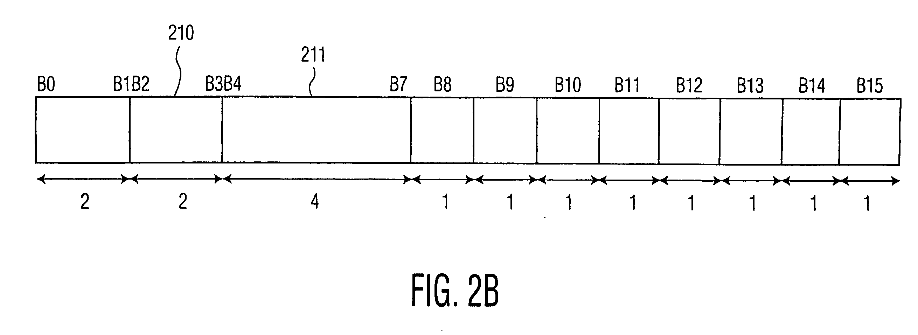

Figure 2b illustrates the format of the Frame Control field of the MAC layer. The frame control field shown in Figure 2b includes two (2) bits for type, 210 and four (4) bits for subtype, 211 that determine whether the next frame is of a MAC Layer Data, Management or Control format. Figure 2b also includes a Power Management field that is used to indicate the power management mode of a client device. In one mode a value of "1" in the power management field indicates that the client device is in a power saving mode. A value of "0" indicates that the client device is always in an active mode.

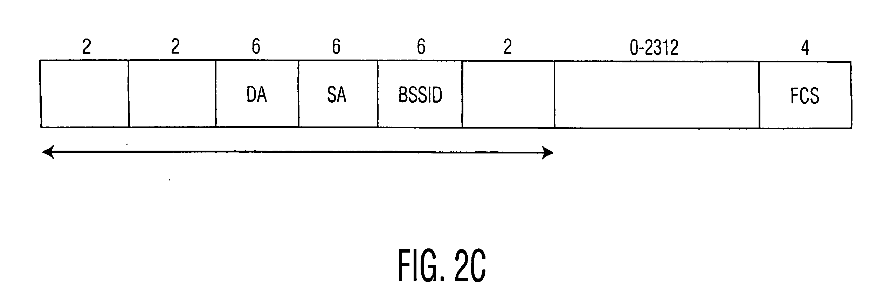

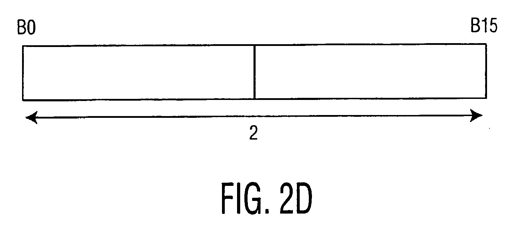

Figure 2c illustrates a proposed MAC layer Management Frame format which includes two-byte Frame Control field that determined the type of Management Frame Format. For example, Management Frame Format can be Request (association, probe, action, add TS action, block acknowledgement), and Response (association, probe, action, add TS action, block acknowledgement), etc. Within the Action request there are QoS, DLP and block acknowledgment actions. Furthermore, with the QoS action request there is the sub - request for "Add Traffic Specification" (AddTS), and, also a re sponse to the AddTS request. The response to the request AddTS includes a Status Code Fixed Field that is used a Response Management Frame to indicate the success or failure of a requested operation. Figure 2d illustrates the two (2) byte Status Code Field. An example of Status Code Fields are shown in Table 1.

**Table 1: Exemplary Status Code Field Definitions**

| | |
|---|---|
| 32 | Unspecified, QoS-rebied failure |
| 33 | Association denied due to QAP having insufficient bandwidth to handle another QSTA |
| 34 | Association denied due to excessive frame loss rates and/or poor conditions on current operating channel |
| 35 | Association (with QBSS) denied due to requesting station not supporting the QoS facility |
| 37 | The request has been declined. |
| 38 | The request has not been successful as one or more parameters have invalid values. |
| 39 | The TS has not been crested because the request cannot be honored. However, a suggested TSPEC is provided so that the initiating QSTA may attempt to set another TS with the suggested changes to the TSPEC. |
| 40 | The TS has not been created. However, the HC may be capable of creating a TS, in response to a request, after the time indicated in the TS Delay element. |
| 41 | Direct Link is not allowed in the BSS by policy |
| 42 | Destination STA is not present within this QBSS. |
| 43 | The Destination STA is not a QSTA. |

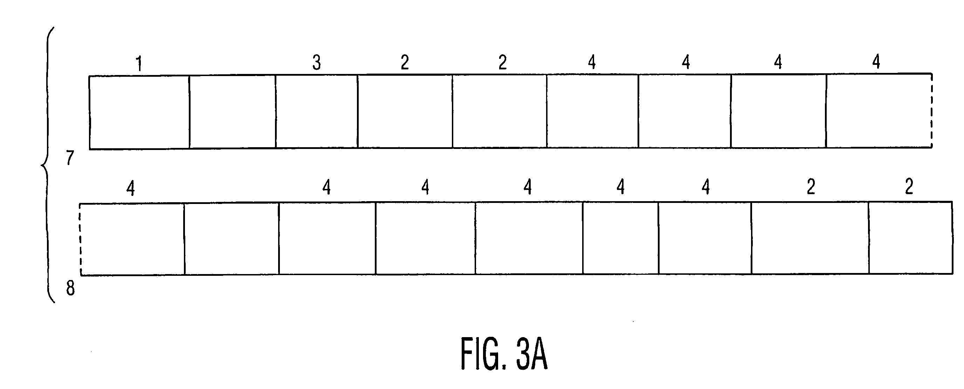

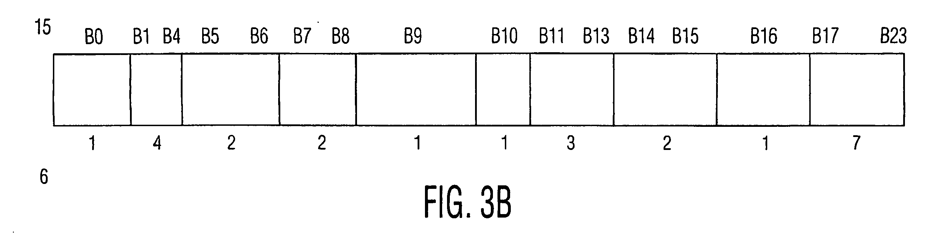

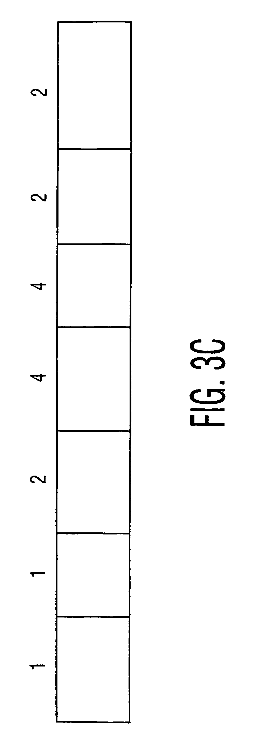

Figure 3a illustrates a Traffic Specification format used to set up communications between a client device and a network access point. Figure 3b illustrates the format of the TS Info field within the Traffic Specification format shown in Figure 3a. As shown, the TS Info field includes an Automatic Power Saving Delivery (APSD) field and a Schedule field. The APSD field, when set, informs the A P that the client device is operating in a power saving mode and the schedule field, when set, informs the AP that the client device requests that services be provided on a proposed scheduled basis. In this manner, the client device may awaken from the power saving mode at a time just before the expected transmission of the requested service. Figure 3c illustrates a format for a proposed schedule.

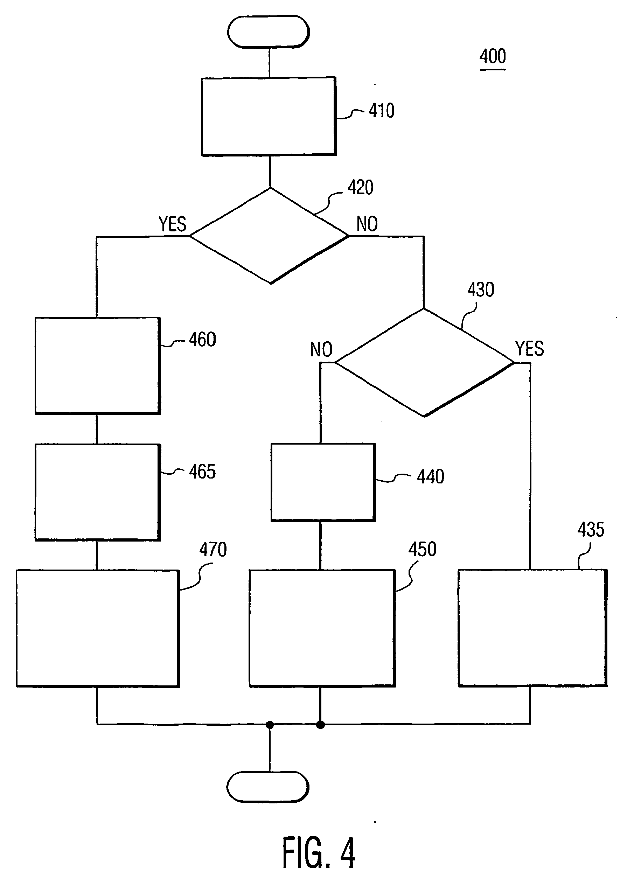

Figure 4 illustrates a flow chart of an exemplary processing 400 for processing a service request from a client device in accordance with the principles of the invention. In this illustrated process, a service request is received at block 410. At block 420 a determination is made whether the service requested is to be provided on a scheduled basis. In one aspect of the invention, a scheduled based service may be requested by setting the "schedule bit" shown in Figure 3b. If the answer is negative, then a determination is made, at block 430, whether the service provider can honor the non-scheduled, i.e., the "unscheduled" request. If the answer is in the affirmative, then an indication is returned to the requesting client device, at block 435, that the requested service can be accommodated. In one aspect, the indication may include setting the "schedule bit", shown in Figure 3b to a first logical value, e.g., a zero value.

However, if the answer is negative, then a schedule for providing service to the requesting client device is determined at block 440. The provide schedule may be based on current and projected operating demands, loads and processing capability. An indication is then returned to the requesting client device, at block 450, that the service is accommodated with change. In one aspect, the indication may include setting the "schedule bit", show n in Figure 3b to a second logical value, e.g., a one value. In addition, the determined schedule is also provided to the requesting client device.

Returning to the determination at block 420, if the answer is affirmative, then the service provider reviews the requested schedule at block 460. At block 465, the service provider may modify the proposed schedule. Modifications of the proposed schedule may be necessary based on factors such as conflicts with existing schedules, station loading, current demands, current loads, projected demands, projected loads and/or other processing considerations.

At block 470, an indication is then returned to the requesting client device that the requested service is accommodated or accommodated with change. In one as pect, the indication may include setting the "schedule bit", shown in Figure 3b, to a second logical value, e.g., a one value. In addition, the schedule of service, whether as -proposed or as-requested by the client device or modified by a network component, e.g., AP 120, is also provided to the requesting client device.

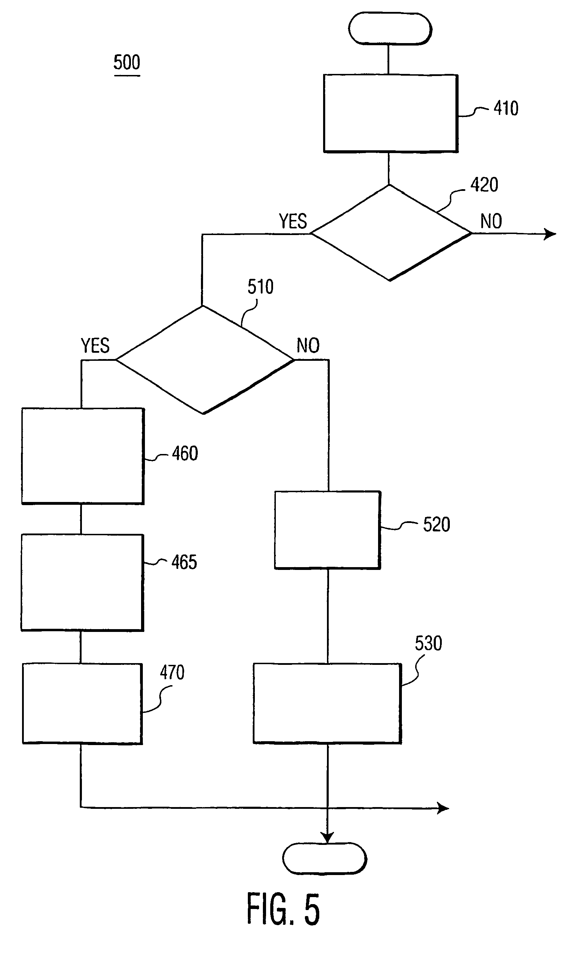

Figure 5 illustrates a flow chart of a second aspect 500 of the processing shown in Figure 4. In this illustrative aspect of the invention, after determining, at block 420, that a request for scheduled service was received, a determination is made, at block 510, whether the network policy and/or network conditions allow accepting the request. If the answer is in the affirmative then the processing proceeds to review the proposed schedul e, modify it, if necessary, and transmit an indication of scheduled service as discussed with regard to processing shown in Figure 4 at blocks 460, 465 and 470.

However, if the answer is negative, then an indication is provided to the requesting device that the request for service has been denied at block 530. Service may be denied, for example, if AP 120 is operating in an on-demand only mode and has no provisions for preparing a schedule. Although not shown, it would be recognized that a review of the client proposed schedule may be made prior to the determination at block 510 and a denial of service may also occur if the proposed schedule cannot be accommodated in view of the current demand and load requirements placed on the AP 120.

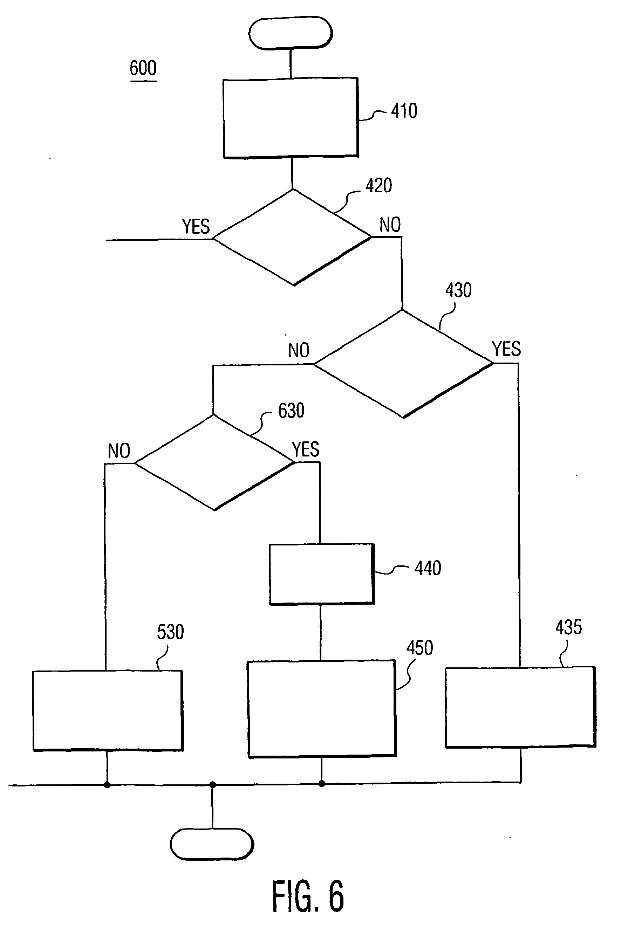

Figure 6 illustrates a flow chart of a third aspect 600 of the present invention. In this aspect, when it is determined, at block 420, that the requested service is an unscheduled service, a determination is made at block 430 whether the AP 120 (service provider) can honor the requested service. If the answer is in the affirmative, then an indication is provided to the requesting device as previously discussed with regard to processing block 435 (see Figure 4).

However, if the answer at block 430 is negative, then a determination is made at block 630 whether network policy and/or network conditions allow accepting the request. If the answer is in the affirmative, then a schedule is set up and an indication is provided to the requesting device as previously discussed with regard to processing blocks 440 and 450 as shown in Figure 4.

However, if the answer is negative, then an indication is provided to the requesting device that the requested service is denied at block 530.

In one aspect of the invention, the indication provided to the requesting client device communicating using an IEEE 802.11e communication protocol, may, for example, be formed as a combination of data items shown in Figure 2. For example, the indication may be formulated as shown in Table 2.

**Table 2: Proposed Indication Configuration**

| Operation | Status Code | APSD | Sched. Bit | |
|---|---|---|---|---|
| Requested Unscheduled service | 00 | 1 | 0 | Accommodated |
| Requested Scheduled service | 00 | 1 | 1 | Accommodated |
| Requested Unscheduled service | 00 | 1 | 1 | Accommodated with change |
| Requested Scheduled service | 00 | 1 | 1 | Accommodated with change |
| Requested Unscheduled service | 37 | X | X | Denied |
| Requested Scheduled service | 37 | X | X | Denied |

| | | | | |
|---|---|---|---|---|
| X = don't care | | | | |

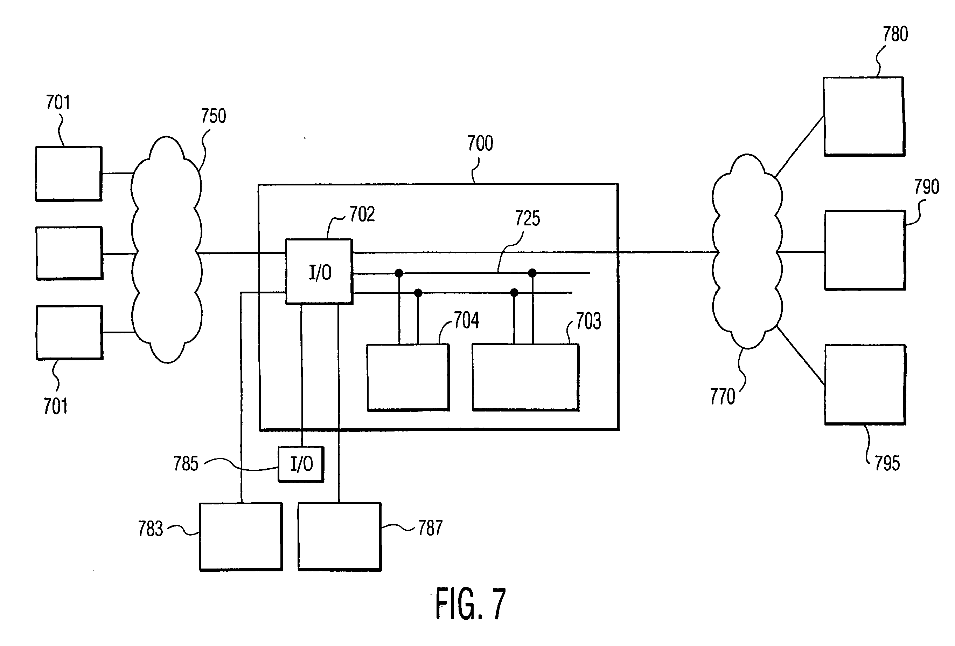

Figure 7 illustrates an exemplary embodiment of a system 700 that may be used for implementing the principles of the present invention. System 700 may contain one or more input/output devices 702, processors 703 and memories 704. I/O devices 702 may access or receive information from one or more sources 701 that request services from processor(s) 703. Client devices 701 may be devices such as a television system, computers, notebook computer, PDAs, cells phones or other portable devices. Devices 701 may request access over one or more network connections 750 via, for example, a wireless wide area network, a wireless metropolitan area network, a wireless local area network, a terrestrial broadcast system (Radio, TV), a satellite network, a cell phone, or a wireless telephone network, as well as portions or combinations of these and other types of networks.

Input/output devices 702, processors 703 and memories 704 may communicate over a communication medium 725. Communication medium 725 may represent, for example, a bus, a communication network, one or more internal connections of a circuit, circuit card or other apparatus, as well as portions and combinations of these and other communication media. Input data requests from the client devices 701 is processed in accordance with one or more programs that may be stored in memories 704 and executed by processors 703. Processors 703 may be any means, such as general purpose or special purpose computing system, or may be a hardware configuration, such as a laptop computer, desktop computer, a server, handheld computer, dedicated logic circuit, or integrated circuit. Processors 703 may also be Programmable Array Logic (PAL), Application Specific Integrated Circuit (ASIC), etc., which may be hardware "programmed" to include software instructions that provide a known output in response to known inputs. In one aspect, hardware circuitry may be used in place of, or in combination with, software instructions to implement the invention. The elements illustrated herein may also be implemented as discrete hardware elements that are operable to perform the operations shown using coded logical operations or by executing hardware executable code.

In a one aspect, the principles of the present invention may be implemented by computer readable code executed by processor 703. The code may be stored in the memory 704 or read/downloaded from a memory medium 783, an I/o device 785 or magnetic, optical media such as a floppy disk, a CD-ROM or a DVD.

Requests from the device 701 received by I/O device 702 after processing in accordance with one or more software programs operable to perform the functions illustrated herein may also be transmitted over network 770 to one or more output devices represented as display 780, reporting device 790 or second processing system 795. As discussed with regard to Figures 4-6, an indication responsive to the requested service is returned to the requesting device. The returned indication typically is provided through network 630 but may be provided by other communication media (not shown).

As one skilled in the art would recognize, the term computer or com puter system may represent one or more processing units in communication with one or more memory units and other devices, e.g., peripherals, connected electronically to and communicating with the at least one processing unit. Furthermore, the devices may be electronically connected to the one or more processing units via internal busses, e.g., ISA bus, microchannel bus, PCI bus, PCMCIA bus, etc., or one or more internal connections of a circuit, circuit card or other device, as well as portions and combinations of these and other communication media or an external network, e.g., the Internet and Intranet.

While there has been shown, described, and pointed out fundamental novel features of the present invention as applied to preferred embodiments thereof, it will be understood that various omissions and substitutions and changes in the apparatus described, in the form and details of the devices disclosed, and in their operation, may be made by those skilled in the art without departing from the scope of the present invention as defined in the appended claims. It is expressly intended that all combinations of those elements that perform substantially the same function in substantially the same way to achieve the same results are within the scope of the invention. Substitutions of elements from one described embodiment to another are also fully intended and contemplated, as far as than are within scope of the present invention as defined in the appended claims.

## Claims

1. A method for determining in a network component when to provide service to client devices operating in power-saving mode in a wireless network, said method comprising the steps of:
receiving a service request signal (410) from said client device;
determining an ability to accommodate said service requested; **characterised by**: determining wether the service requested is to be provided on a scheduled basis, wherein said scheduled basis is requested by the setting of a scheduled bit on a schedule field within a Traffic Specification format; and
providing an indication of the ability to accommodate said service requested to said client device.

2. The method as recited in claim 1, wherein said requested service is selected from the group consisting of: scheduled and unscheduled.

3. The method as recited in claim 2, wherein said scheduled service request signal includes a proposed service schedule (460).

4. The method as recited in claim 3, further comprising the step of: modifying said proposed service schedule (465).

5. The method as recited in claim 4, further comprising the step of: providing said modified service schedule to said client device (470).

6. The method as recited in any preceding claim, wherein said indication is selected from the group consisting of: denied, accommodated with change, accommodated- (435, 450,470).

7. The method as recited in any of claims 1 to 5, wherein said indication includes setting a scheduled bit to a first logical value if the requested service can be accommodated and setting the scheduled bit to a second logical value if the requested service is accommodated with change.

8. The method as recited in any preceding claim, wherein the step of determining an ability to accommodate is based on at least one factor selected from the group consisting of: the requested servicing method, the proposed schedule, network operating state, network policy, and network condition (510, 630).

9. A device for determining in a network component when to provide service to client devices operating in power-saving mode in a wireless network, said device comprising: a memory (704); a processor (703) in communication with said memory, said processor operable to execute code for:
receiving a service request signal (410) from said client device (701);
determining an ability to accommodate said service requested; **characterised by**: determining whether the service requested is to be provided on a scheduled basis, wherein said scheduled basis is requested by the setting of a scheduled bit on a schedule field within a Traffic Specification format; and
providing an indication of the ability to accommodate said requested service to said client device.

10. The device as recited in claim 9, wherein said requested service is selected from the group consisting of: scheduled and unscheduled.

11. The device as recited in claim 9 or 10, wherein said scheduled requested servicing signal includes a proposed service schedule (460).

12. The device as recited in claim 11, wherein said processor is further operable to execute code for: modifying said proposed service schedule (465).

13. The device as recited in claim 12, wherein said processor is further operable to execute code for: providing said modified service schedule to said client device (470).

14. The device as recited in claim 9, wherein said indication is selected from the group consisting of: denied, accommodated with change, accommodated (435, 450,470).

15. The device recited in any of claims 9 to 13, wherein said indication includes setting a scheduled bit to a first logical value if the requested service can be accommodated and setting the scheduled bit to a second logical value if the requested service is accommodated with change.

16. The device as recited In any of claims 9 to 15, wherein said processor is further operable to execute code for: determining said ability to accommodate based on at least one factor selected from the group consisting of: the requested servicing method, the proposed schedule, network operating state, network policy, and network condition (430,510, 630).

17. The device as recited in any of claims 9 to 16, further comprising: an I/O device (702) operable as an interface between said network and said processor.

18. The device as recited in any of claim 9 to 17, wherein said code is stored in said memory.

19. The device as recited in any of claims 9 to 18, further comprising: a receiving device for receiving said service request signal; and a transmitting device for providing at least said indication to said client device.

20. A processor (703) within a network component (700) for determining the ability of said network component to honor a service request signal received from a client device (701), said processor executing code for:
reviewing an operating state of said network component (430, 510, 630) ; reviewing said servicing request signal (420), **characterised by**: determining whether the service requested is to be provided on a scheduled basis, wherein said scheduled basis is requested by the setting of a scheduled bit on a schedule field within a Traffic Specification format;
accommodating said service request, with modification when necessary, when said operating state and said servicing request signal are corresponding (435,470); and
providing an indication of said accommodation to said client.

21. The processor as recited in claim 20, further executing code for: providing an indication of denying said servicing request signal when said operating state and said servicing request signal are not corresponding (530).

22. The processor as recited in claim 20 or 21, wherein said operating state is selected from the group consisting of: processing load, demand, projected processing load, projected demand, network component operating state, network component policy, and network component condition.

23. The processor as recited in any one of claims 20 to 22, device wherein said indication includes setting a scheduled bit to a first logical value if the requested service can be accommodated and setting the scheduled bit to a second logical value if the requested service is accommodated with change.

24. The processor as recited in any one of claims 20 to 23 wherein said servicing request signal is selected from the group consisting of: scheduled and unscheduled.

## Patentansprüche

1. Verfahren, um in einer Netzwerkkomponente zu bestimmen, wann Client-Vorrichtungen ein Dienst bereitzustellen ist, die in einem drahtlosen Netzwerk in einem Energiesparmodus arbeiten, wobei das Verfahren die Schritte umfasst:
Empfangen eines Dienstanforderungssignals (410) von einer Client-Vorrichtung;
Bestimmen einer Fähigkeit, den angeforderten Dienst leisten;
**gekennzeichnet durch**:
Bestimmen, ob der angeforderte Dienst auf einer zeitlich geplanten Grundlage bereitzustellen ist, wobei die zeitlich geplante Grundlage **durch** das Setzen eines Geplant-Bits in einem Plan-Feld innerhalb eines Verkehrsspezifikationsformats angefordert wird; und
Bereitstellen einer Anzeige der Fähigkeit, den angeforderten Dienst zu leisten, für die Client-Vorrichtung.

2. Verfahren nach Anspruch 1, wobei der angeforderte Dienst aus der Gruppe ausgewählt ist, die besteht aus: zeitlich geplant und zeitlich ungeplant.

3. Verfahren nach Anspruch 2, wobei das Geplanter-Dienst-Anforderungssignal einen vorgeschlagenen Dienstzeitplan (460) enthält.

4. Verfahren nach Anspruch 3, das ferner den Schritt umfasst: Modifizieren des vorgeschlagenen Dienstzeitplans (465).

5. Verfahren nach Anspruch 4, das ferner den Schritt umfasst: Bereitstellen des modifizierten Dienstzeitplans für die Client-Vorrichtung (470).

6. Verfahren nach irgendeinem der vorangehenden Ansprüche, wobei die Anzeige aus der Gruppe ausgewählt ist, die besteht aus: abgelehnt, mit Änderung angenommen, angenommen (435, 450, 470).

7. Verfahren nach irgendeinem der Ansprüche 1 bis 5, wobei die Anzeige das Setzen eines Geplant-Bits auf einen ersten logischen Wert, wenn der angeforderte Dienst geleistet werden kann, und das Setzen des Geplant-Bits auf einen zweiten logischen Wert, wenn der angeforderte Dienst mit Änderung geleistet wird, enthält.

8. Verfahren nach irgendeinem der vorangehenden Ansprüche, wobei der Schritt des Bestimmens einer Fähigkeit zum Leisten auf wenigstens einem Faktor beruht, der aus der Gruppe ausgewählt ist, die besteht aus: dem angeforderten Dienstleistungsverfahren, dem vorgeschlagenen Zeitplan, Netzwerkbetriebszustand, Netzwerkrichtlinien und Netzwerkzustand (510, 630).

9. Vorrichtung, um in einer Netzwerkkomponente zu bestimmen, wann ein Dienst den Client-Vorrichtungen bereitzustellen ist, die in einem drahtlosen Netzwerk in einem Energiesparmodus arbeiten, wobei die Vorrichtung umfasst:
einen Speicher (704); einen Prozessor (703), der mit dem Speicher in Verbindung steht, wobei der Prozessor so betreibbar ist, dass er Code ausführt zum:
Empfangen eines Dienstanforderungssignals (410) von der Client-Vorrichtung (701);
Bestimmen einer Fähigkeit, den angeforderten Dienst zu leisten;
**gekennzeichnet durch**:
Bestimmen, ob der angeforderte Dienst auf einer zeitlich geplanten Grundlage bereitzustellen ist, wobei die zeitlich geplante Grundlage **durch** das Setzen eines Geplant-Bits in einem Plan-Feld innerhalb eines Verkehrsspezifikationsformats angefordert wird; und
Bereitstellen einer Anzeige der Fähigkeit, den angeforderten Dienst zu leisten, für die Client-Vorrichtung.

10. Vorrichtung nach Anspruch 9, wobei der angeforderte Dienst aus der Gruppe ausgewählt ist, die besteht aus: zeitlich geplant und zeitlich ungeplant.

11. Vorrichtung nach Anspruch 9 oder 10, wobei das Geplanter-DienstAnforderungssignal einen vorgeschlagenen Dienstzeitplan (460) enthält.

12. Vorrichtung nach Anspruch 11, wobei der Prozessor ferner so betreibbar ist, dass er Code ausführt zum: Modifizieren des vorgeschlagenen Dienstzeitplans (465).

13. Vorrichtung nach Anspruch 12, wobei der Prozessor ferner so betreibbar ist, dass er Code ausführt zum: Bereitstellen des modifizierten Dienstzeitplans für die Client-Vorrichtung (470).

14. Vorrichtung nach Anspruch 9, wobei die Anzeige aus der Gruppe ausgewählt ist, die besteht aus: abgelehnt, mit Änderung angenommen, angenommen (435, 450, 470).

15. Vorrichtung nach irgendeinem der Ansprüche 9 bis 13, wobei die Anzeige das Setzen eines Geplant-Bits auf einen ersten logischen Wert, wenn der angeforderte Dienst geleistet werden kann, und das Setzen des Geplant-Bits auf einen zweiten logischen Wert, wenn der angeforderte Dienst mit Änderung geleistet wird, enthält.

16. Vorrichtung nach irgendeinem der Ansprüche 9 bis 15, wobei der Prozessor ferner so betreibbar ist, dass er Code ausführt zum: Bestimmen der Fähigkeit zum Leisten auf der Grundlage wenigstens eines Faktors, der aus der Gruppe ausgewählt ist, die besteht aus: dem angeforderten Dienstleistungsverfahren, dem vorgeschlagenen Zeitplan, Netzwerkbetriebszustand, Netzwerkrichtlinien und Netzwerkzustand (430, 510, 630).

17. Vorrichtung nach irgendeinem der Ansprüche 9 bis 16, ferner umfassend:
eine E/A-Vorrichtung (702), die als Schnittstelle zwischen dem Netzwerk und
dem Prozessor betreibbar ist.

18. Vorrichtung nach irgendeinem der Ansprüche 9 bis 17, wobei der Code in dem Speicher gespeichert ist.

19. Vorrichtung nach irgendeinem der Ansprüche 9 bis 18, ferner umfassend:
eine Empfangsvorrichtung zum Empfangen des Dienstanforderungssignals; und
eine Sendevorrichtung zum Bereitstellen wenigstens der Anzeige für die Client-Vorrichtung.

20. Prozessor (703) innerhalb einer Netzwerkkomponente (700) zum Bestimmen der Fähigkeit der Netzwerkkomponente, ein von einer Client-Vorrichtung (701) empfangenes Dienstanforderungssignal zu akzeptieren, wobei der Prozessor Code ausführt zum:
Überprüfen eines Betriebszustands der Netzwerkkomponente (430, 510, 630); wobei das Überprüfen des Dienstanforderungssignals (420) **gekennzeichnet ist durch**: Bestimmen, ob der angeforderte Dienst auf einer zeitlich geplanten Grundlage bereitzustellen ist, wobei die zeitlich geplante Grundlage angefordert wird, indem ein Geplant-Bit in einem Geplant-Feld innerhalb eines Verkehrsspezifikationsformats gesetzt wird;
Bedienen der Dienstanforderung, wenn nötig mit Modifikation, wenn der Betriebszustand und das Dienstanforderungssignal einander entsprechen (435, 470); und
Bereitstellen einer Anzeige des Annehmens für den Client.

21. Prozessor nach Anspruch 20, der ferner Code ausführt zum: Bereitstellen einer Anzeige einer Ablehnung eines Dienstleistungsanforderungssignals, wenn der Betriebszustand und das Dienstleistungsanforderungssignal einander nicht entsprechen (530).

22. Prozessor nach Anspruch 20 oder 21, wobei der Betriebszustand aus der Gruppe ausgewählt ist, die besteht aus: Verarbeitungsbelastung, Bedarf, veranschlagte Verarbeitungsbelastung, veranschlagter Bedarf, Netzwerkkomponentenbetriebszustand, Netzwerkkomponentenrichtlinien und Netzwerkkomponentenzustand.

23. Prozessor nach irgendeinem der Ansprüche 20 bis 22, wobei die Anzeige das Setzen eines Geplant-Bits auf einen ersten logischen Wert, wenn der angeforderte Dienst geleistet werden kann, und das Setzen des Geplant-Bits auf einen zweiten logischen Wert, wenn der angeforderte Dienst mit Änderung geleistet wird, enthält.

24. Prozessor nach irgendeinem der Ansprüche 20 bis 23, wobei das Dienstleistungsanforderungssignal ausgewählt ist aus der Gruppe, die besteht aus: zeitlich geplant und zeitlich ungeplant.

## Revendications

1. Une méthode pour déterminer au sein d'un composant réseau quand fournir un service à des dispositifs client sans fil fonctionnant en mode d'économie d'énergie, ladite méthode comportant les étapes :
- réception d'un signal de requête de service (410) de la part dudit dispositif client ;
- détermination de la capacité à traiter ledit service requis ;
**caractérisée par** :
- la détermination que le service requis peut être fourni sur une base temporisée, ladite base temporisée étant sollicitée par la fixation d'un bit temporisé dans un champ de temporisation d'un format de spécification de traffic ; et
- la mise à disposition d'une indication sur la capacité à traiter ledit service requis par ledit dispositif client.

2. La méthode telle que définie dans la revendication 1 dans laquelle ledit service requis est choisi au sein d'un groupe de services temporisés et non temporisés.

3. La méthode telle que définie dans la revendication 2 dans laquelle ledit signal de requête de service temporisé comporte un calendrier de services proposés (460).

4. La méthode telle que définie dans la revendication 3 comportant en outre l'étape de modification dudit calendrier de services proposés (465).

5. La méthode telle que définie dans la revendication 4 , comportant an outre l'étape de mise à disposition audit dispositif client (470) dudit calendrier de services modifiées.

6. La méthode telle que définie dans l'une quelconque des revendications précédentes, dans laquelle ladite indication est sélectionnée au sein d'un groupe comportant : refus , traiter avec modification, traiter (435, 450, 470) .

7. La méthode telle que définie dans l'une quelconque des revendications 1 à 5, dans laquelle ladite indication comporte la fixation d'un bit temporisé à un premier niveau logique lorsque le service requis peut être traité et la fixation du bit temporisé à un second niveau logique lorsque le service requis est traité avec une modification.

8. La méthode telle que définie dans l'une quelconque des revendications précécentes, dans laquelle l'étape de détermination de la capacité à traiter le service est basé sur au moins un facteur sélectionné au sein d'un groupe comportant : la méthode de service requise ; le calendrier proposé, l'état de fonctionnement du réseau ; la politique du réseau ; et des conditions de réseau (510, 630).

9. Un dispositif pour déterminer au sein d'un composant réseau quand fournir un service à des dispositifs client sans fil fonctionnant en mode d'économie d'énergie, ledit dispositif comprenant une mémoire (704) ; un processeur (703) en communication avec ladite mémoire ; ledit processeur étant mis en oeuvre pour exécuter du code pour :
- réception d'un signal de requête de service (410) dudit dispositif client (701) ;
- détermination de la capacité à traiter ledit service requis ;
**caractérisé par** :
- la détermination que le service requis peut être traité sur une base temporisée, ladite base temporisée étant sollicitée par la fixation d'un bit temporisé d'un champ de temporisation dans le cadre d'un format de spécification de traffic ; et
- la mise à disposition d'une indication sur la capacité à traiter ledit service requis pour ledit dispositif client .

10. Le dispositif selon la revendication 9 dans lequel ledit service requis est choisi au sein d'un groupe de services temporisés et non temporisés.

11. Le dispositif selon la revendication 9 ou 10 dans lequel ledit signal de requête de service temporisé comporte un calendrier de services proposés (460).

12. Le dispositif selon la revendication 11, dans lequel ledit processeur est susceptible de fonctionner en outre pour l'exécution d'un code pour : la modification dudit calendrier de services proposés (465).

13. Le dispositif selon la revendication 12, dans lequel ledit processeur est susceptible de fonctionner en outre pour l'exécution d'un code pour : la mise à disposition audit dispositif client (470) dudit calendrier de services modifiées.

14. Le dispositif selon la revendication 9, dans lequle ladite indication est sélectionnée au sein d'un groupe comportant : rejet ; traitement avec modification ; traitement (435, 450, 470) .

15. Le dispositif selon l'une quelconque des revendications 9 à 13, lequel ladite indication comporte la fixation d'un bit temporisé à un premier niveau logique lorsque le service requis peut être traité et la fixation du bit temporisé à un second niveau logique lorsque le service requis est traité avec une modification.

16. Le dispositif selon l'une quelconque des revendications 9 à 15, dans lequel ledit processeur est susceptible de fonctionner en outre pour l'exécution d'un code pour :
déterminer la capacité à traiter le service est basé sur au moins un facteur sélectionné au sein d'un groupe comportant : la méthode de service requise ; le calendrier proposé, l'état de fonctionnement du réseau ; la politique du réseau ; et
des conditions de réseau (430, 510, 630).

17. Le dispositif tel que défini dans l'une quelconque des revendications 9 à 16, comportant en outre : un dispositif d'E/S (702) fonctionnant en qualité d'interface entre le réseau et ledit processeur.

18. Le dispositif tel que défini dans l'une quelconque des revendications 9 à 17, dans lequel ledit code est stocké au sein de ladite mémoire.

19. Le dispositif tel que défini dans l'une quelconque des revendications 9 à 18, comportant en outre : un dispositif de réception pour la réception dudit signal de requête de service ; et un dispositif de transmission pour transmettre au moins une indication audit dispositif client.

20. Un processeur (703) au sein d'un composant réseau (700) pour déterminer la capacité dudit composant réseau d'honorer un signal de requête de service reçu d'un dispositif client (701), ledit processeur exécutant du code pour :
- examiner l'état de fonctionnement dudit composant réseau (430, 510, 630) ;
- examiner ledit signal de requête de service (420) ; **caractérisé par**
- la détermination que le service requis peut être fourni sur une base temporisée, ladite base temporisée étant sollicitée par la fixation d'un bit temporisé d'un champ de temporisation dans le cadre d'un format de spécification de traffic ; et
- le traitement de ladite requête de service ; au besoin avec une modification, dès lors que l'état de fonctionnement et et ledit signal de requête de service se correspondent (435, 470) ; et
- la fourniture d'une indication de traitement audit dispositif client.

21. Le processeur tel que défini dans la revendication 20 , comportant en outre du code pour : fournir une indication de rejet dudit signal de requête de service lorsque l'état de fonctionnement et ledit signal de requête de service ne se correspondent pas (530).

22. Le processeur tel que défini dans les revendications 20 ou 21, dans lequel l'état de fonctionnement est sélectionné au sein d'un groupe comprenant : charge de traitement, demande, charge de traitement projectée, demande projetée, état de fonctionnement du composant réseau, politique du composant réseau, et conditions relatives au composant réseau.

23. Le processeur tel que défini dans les revendications 22 à 24 dans lequel ladite indication comporte la fixation d'un bit temporisé à un premier niveau logique lorsque le service requis peut être traité et la fixation du bit temporisé à un second niveau logique lorsque le service requis est traité avec une modification.

24. Le processeur tel que défini dans l'une quelconque des revendications 20 à 23 dans lequel le signal de requête de service est choisi au sein d'un groupe comprenant : temporisé et non temporisé.
